(19) Europäisches Patentamt
European Patent Office
Office européen des brevets

(11) Publication number: **0 393 407 B1**

(12) # EUROPEAN PATENT SPECIFICATION

(45) Date of publication of patent specification: **15.06.94**

(51) Int. Cl.[5]: **C09J 163/00**, C09J 4/02, C09D 163/00, C09D 4/02, C09K 3/12, C08F 4/00

(21) Application number: **90106141.6**

(22) Date of filing: **30.03.90**

(54) **Adhesive/sealant composition and method of applying same.**

(30) Priority: **19.04.89 US 340622**

(43) Date of publication of application:
**24.10.90 Bulletin 90/43**

(45) Publication of the grant of the patent:
**15.06.94 Bulletin 94/24**

(84) Designated Contracting States:
**DE ES FR GB**

(56) References cited:
**US-A- 1 456 035**
**US-A- 4 219 377**

**DERWENT ACCESSION NO. 86-116 793, Ouestel Telesystems (WPIL) DERWENT PUBLICATIONS LTD., London**

(73) Proprietor: **National Starch and Chemical Investment Holding Corporation**
**501 Silverside Road**
**Wilmington, Delaware 19809(US)**

(72) Inventor: **Price, Andrew**
**25 Curlew Drive,**
**Hythe**
**Southhampton, Hampshire, S04 6GB(GB)**
Inventor: **Baldwin, Terrence R.**
**5 Brook Way**
**Romsey, Hampshire, S05 8JZ(GB)**

(74) Representative: **Hagemann, Heinrich, Dr. et al**
**Patentanwälte**
**Hagemann & Kehl**
**Postfach 860329**
**D-81630 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a method of applying sealant compositions to gas mains and other underground pipelines. However, the principles and adhesive, sealant or coating compositions disclosed hereinafter may well find utility in other adhesive, sealant or coating applications.

The in situ sealing of leaks in gas mains and other underground pipelines presents major problems in an area where demand is growing rapidly due to the deterioration of such pipelines, which, in many places such as the United Kingdom and the United States, have been in place and in use for many years. Over that time the pipes, which are mainly cast iron pipes, have become porous or have cracked for a variety of reasons such as age, corrosion, subsidence of surrounding soil, and the passage of heavy trucks and other vehicles over roads under which the underground pipes are buried. Moreover, the scale of the problem can be so huge that the digging up and replacement of the old and broken mains becomes an economic impossibility, and in many cases where, for example, the pipeline passes under a building, also a physical impossibility.

Various methods and compositions have been used and proposed in the past for the in situ repair of underground pipelines. Such methods, In general include using either injection or spraying sealant material inside the pipeline at the point of fracture, or a fogging technique in which a sealant is introduced into the pipeline as a fog or mist, the suspended droplets of which deposit on the inside of the pipeline to seal any cracks or fissures therein, or to seal any corroded or porous sections of the pipeline.

Where the pipeline is accessible, other methods have involved exposing the pipeline and either replacing the broken or porous section with a new section, or, where that is not possible or economical, applying a sealant coating, e.g. a polyurethane coating, around the exterior of the pipe.

An alternative method, used particularly on relatively small diameter pipelines such as those supplying gas to domestic premises, is to feed a new, smaller diameter, flexible plastics pipe through the gas main, which then simply acts as a conduit to accommodate the smaller diameter plastics replacement pipeline inside the previously existing pipeline. In such a method, the gas supply is to the plastics replacement pipeline, rather than to the existing, broken, cracked or corroded pipeline. This method of inserting a new pipeline inside the old is a quick, easy and inexpensive method of repair, but is of limited applicability because of the reduced capacity of the inserted, smaller diameter pipeline, as compared with that of the original pipeline.

A variety of sealant materials for sealing the inside of underground pipelines such as gas mains, have been proposed, including both one part and two part compositions. By two part composition is meant a sealant composition comprising two components, usually monomer and initiator or curing agents, which have to be mixed before application, or possibly mixed in situ on the inside of the pipeline. As two part sealant compositions for sealing leaks and fractures in underground pipelines, a variety of different compositions have been proposed, including two part polyester compositions, two part epoxy compositions, two part acrylic compositions, and two part polyurethanes. Such two part compositions, however, possess a common disadvantage arising from the fact that they have to be premixed before application, which in turn introduces a variety of other problems. These problems include premature setting or gelation, making such compositions difficult to deliver to the injection site if premixed at a remote location, and difficult to spray or inject often for the very opposite reasons, namely inadequate viscosity or too prolonged a setting time.

Additionally, the two part compositions mainly used as sealants for underground pipelines, namely two-part epoxies and two-part polyurethanes, have additional disadvantages. The epoxy systems are slow curing, brittle and exhibit relatively poor adhesion. Two part polyurethanes possess greater flexibility and cure more quickly, but their adhesion to poorly prepared surfaces, such as exist in underground pipelines, is not good, and, moreover, the hydrolytic durability of polyurethanes, i.e. their ability to resist hydrolytic attack in moist environments, is suspect.

One part sealant compositions, e.g., anaerobics, are not subject to problems arising out of the need to premix the components before use, but exhibit their own application problems and limitations.

The ultraviolet (UV) curing resins are known and have been extensively used as UV-curable coatings and lacquers, and as UV-curable inks in the printing industry. The majority of UV-curing systems are based on acrylic monomers capable of undergoing polymerization by a free radical mechanism, and which contain a photoinitiator, usually an aromatic ketone such as benzophenone, capable of generating free radicals by a process of intramolecular H-abstraction upon exposure of the composition to UV light or electron beam radiation. Such UV-cured coatings are generally only viable as thin layer coatings, since in thicker coatings the depth of cure obtainable by UV initiation is limited.

More recently other UV-curable systems have been developed based on cationically polymerizable monomers and using as a photoinitiator a compound, usually an onium compound, capable of producing a

cationic species upon exposure to UV or electron beam radiation, to initiate the polymerization process. Compared with free radical initiated systems, such cationic UV-systems have the advantage that cure continues without the need for continued irradiation, thus achieving an in-depth curing of thicker coatings which is not obtainable in other systems. In many sealing or coating applications, present cationic UV or EBC (electron beam curing) systems based on cationically polymerizable epoxy monomers have the disadvantage that the rate of cure is slow, giving rise to relatively long gel and cure times. This is disadvantageous in many sealing and coating applications, and would render such compositions, although advantageous in other ways, useless as sealants for sealing leaks in underground pipelines, where rapid gelling is necessary in order to retain the sealant composition either on the inner walls of the pipe after spraying thereon (which is the usual and preferred method of application in such circumstances), or in the cracks or fissures after injection of the sealant thereon if an injection, rather than spraying, technique is used.

The interest in UV-curable systems, particularly with onium type photoinitiators, has led to a variety of photocurable compositions. In US-A-4,090,936 a photohardenable liquid composition is disclosed which is useful as plating and etching resists and which comprises a particular epoxy material of 1 to 1.3 average epoxide groups, a compatable organic polymer and an aromatic onium complex salt. US-A-4,156,035 discloses photocurable epoxy-acrylate compositions which use a photoinitiator combination of a Group VIa onium salt and a carbonyl type compound to give a fast curing, thick coating. It relates to radiation curable compositions containing epoxy monomers, acrylic monomers (exemplified at a proportion of 60/40) and a photoinitiator of the sulfonium type used alone or in addition to peroxide catalyts. An epoxyacrylate monomer may be present. UV radiation is used to cure the mixtures. The coatings produced hereby are examined and compared. It discloses also different compositions containing only one onium initiator or in mixture with a peroxide catalyst and with or without reactive diluent in order to graduate the properties of the coating.

US-A-4 219 377 refers to similar compositions containing a vinyl - acrylonitrile - butadiene copolymer with an epoxy compound. Thermally stable, readily photocured compositions are shown in US-A- 4,256,828 and comprise an epoxide, an hydroxyl containing organic material and an aromatic iodonium or sulfonium complex salt photoinitiator.

While the above noted as well as other disclosures have shown a number of different photocurable compositions for various uses, there still is the need for a single part, multi component sealant or coating system which has two different cure rates as well as suitable rheology and other properties to permit it to be used in applications such as the sealing of leaking gas lines.

The present invention provides a method of applying an adhesive sealant or coating composition to seal leaks at a remote location in an underground pipeline which comprises feeding the uncured composition to that location and initiating the cure of the composition by exposure to an initiating radiation at that location immediately prior to or after the application of the composition to the pipeline, the composition comprising a single part radiation curable composition containing a slow cure component which is a cationically polymerizable polyepoxide monomer, a fast cure component which is a free radical polymerizable acrylic or substituted acrylic monomer, the slow and fast cure components are polymerizable by different reactions which proceed at two different rates, and a single photoinitatior which is a compound capable upon exposure to a radiation source of generating both a cationic species capable of initating polymerization of the polyepoxide monomer and a free radical species capable of initiating polymerization of the acrylic monomer.

Radiation curable single or one part adhesive, sealant or coating compositions are employed comprising a blend of (a) a slow cure cationically polymerizable polyepoxide monomer and (b) a fast cure free radical polymerizable acrylic or substituted acrylic monomer and (c) a photoinitiator capable of initiating both the cationic polymerization of the epoxy monomer and the free radical polymerization of the acrylic monomer upon exposure to radiation. The single part, two component system has an initial low viscosity which enables pumping over long distances, e.g., through narrow and flexible pipes and hoses followed by a rapid increase in viscosity when irradiation is initiated to give a viscous but sprayable coating or sealant which continues to cure or harden slowly after removal of the radiation source.

By using the single part compositions of this invention having both a slow cure and a fast cure component, a different approach to the application of sealant compositions to underground pipelines to seal cracks and fissures or other points of leakage therefrom, is provided. Not only that, but the principles and compositions herein disclosed can be applied in a variety of other circumstances and substrates, where it might be desirable to provide or prepare a flowable sealant composition at one location, transport the composition to a second location by feeding through an appropriate supply conduit, adjust the rheology of the sealant composition at that second location to provide a curable sealant composition having a desired

rheology permitting the application of that composition to a substrate, e.g. by injection or spraying.

The method of this invention is equally applicable to the application of curable adhesive compositions at a remote location and using similar one part, curable compositions, but formulated as an adhesive rather than merely as a sealant, i.e. as a composition providing adhesive bonding between two superimposed surfaces, although to a large extent such formulations will be identical. Whether the composition is to be described as a sealant or adhesive depends upon the circumstances under which the composition is used, for example, merely to fill a crack or fissure, or the pores of an otherwise porous structure, in which case the composition may be regarded strictly as a sealant, as no adhesion is involved beyond the mere adhesion of the composition to the substrate sufficient to keep the sealant in place, or to provide adhesive bonding between two superimposed surfaces. In practice, the terms "sealant" and "adhesive" are often used synonymously to describe the same composition. That being so, the compositions used in accordance with the present invention will be referred to herein as "adhesives" and/or "sealants", it being understood that the terms are used to cover both compositions formulated for their crack or fissure filling or sealing ability and compositions formulated primarily as adhesives.

The compositions of this invention may also be used in the bonding/sealing of substrates where at least one of the substrates is transparent to the initiating radiation or to radiation opaque substrates where irradiation of the composition is made prior to the application onto the substrates. Additionally, since the compositions of the invention have low viscosity before irradiation, they may be easily pumped over large distances and thus have the advantage of reducing back-pressure when pumping is required. The pumped material can be irradiated either prior to or after application to achieve the desired on-part viscosity. It Is also easier to meter or measure the amount of material being pumped into the system.

Because the adhesive/sealant composition of this invention is adaptable in allowing viscosity and other rheology characteristics to be changed when and where required upon irradiation, its useful application is extensive. For example, applications requiring coverage of large areas can readily be made since the applied material is inert and will only react after irradiation is initiated.

The invention is based on the recognition that upon exposure to radiation (UV, electron beam, or possibly even, in some cases, irradiation with visible light) the photoinitiators used, particularly the onium compounds, decompose not only to produce a cationic species capable of initiating the cationic polymerization process, but also free radical species capable of initiating a free radical polymerization process. Now since the free radical polymerization process is much faster than the cationic process, the presence in the system of a proportion of, preferably acrylate monomers capable of undergoing rapid free radical polymerization, initiates rapid gelling of the otherwise slow curing cationic system.

The polyepoxide slow cure component which is employed in this invention may be any cationically polymerizable organic compound which contains at least two epoxy groups. These are conventional, well known compounds which may be substituted or unsubstituted, aliphatic, cycloaliphatic, aromatic or heterocyclic polyepoxides. The polyepoxides which are used may be terminally or internally situated on the molecules and may include a mixture of one or more of the above described types.

The polyepoxides that are especially useful are the diepoxides and especially the cycloaliphatic diepoxides such as those prepared by the epoxidation of cycloolefins with peracids, particularly peracetic acid. Compounds of this type include 3',4'-epoxycyclohexylmethyl 3,4-epoxycyclohexane carboxylate; vinyl cyclohexane dioxide; bis(3,4-epoxycyclohexylmethyl) adipate and epoxycyclohexyl-spiro-epoxycyclohexane dioxide. Another group of polyepoxides that are useful are the glycidyl polyethers of polyhydric phenols and polyhydric alcohols which are derived from the reaction of an epihalohydrin, e.g. epichlorohydrin with a polyhydric phenol or polyhydric alcohol. Examples of the polyhydric phenols include 2,2-bis(4-hydroxyphenyl) propane (or "bisphenol A" as it is commonly known); resorcinol; hydroquinone; 4,4'-dihydroxybenzophenone; 1,1-bis(4-hydroxyphenyl) ethane; and 2,2-bis(4-hydroxyphenyl) butane. The polyhydric alcohols used in preparing the polyepoxides include glycerine, ethylene glycol, diethylene glycol, propylene glycol, hexanediol, trimethylolpropane and pentaerythritol.

Another group of polyepoxides that may be used are the epoxy novolaks which are epoxy phenol-formaldehyde resins, typically prepared from reacting epichlorohydrin with a phenol-formaldehyde resin.

Preferred epoxy resins are the cycloaliphatic diepoxides and the bisphenol A type diepoxides, especially the glycidyl polyethers. The particularly preferred epoxy components are 3',4'-epoxy cyclohexylmethyl 3,4-epoxycyclohexane carboxylate and the diglycidyl ether of bisphenol A.

The above described polyepoxides are typical epoxy compounds and others known in the art may also be used including those described in US-A-4,608,404 and 4,692,272, in the "Handbook of Thermoset Plastics" edited by Sidney H. Goodman, 1986, pp. 132-141 and in "Encyclopedia of Polymer Science and Engineering", Vol. 6, 1986, pp. 322-338.

The free radical polymerizable fast cure component of the adhesive, sealant or coating composition of this invention is an acrylic or substituted acrylic monomer(s). These monomers which include both the acrylic and methacrylic counterparts can be represented by the following formula:

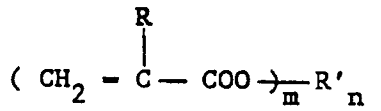

(I)

where R is H or $CH_3$, R' is a mono - or polyvalent organic group, m is an integer of 1 or more depending on the nature of the R' group and n is an integer of 1 or more. Particularly preferred are the monofunctional acrylates where m is 1.

Typical monomers of this type are the monofunctional acrylate and methacrylate esters and the hydroxy, amide, alkoxy, cyano, chloro and silane substituted derivatives thereof. Such monomers include methyl acrylate, methyl methacrylate, ethyl acrylate, hydroxyethyl methacrylate, hydroxypropyl acrylate, hydroxypropyl methacrylate, polypropylene glycol methacrylate, butyl acrylate, n-octyl acrylate, 2-ethylhexyl acrylate, decyl methacrylate, dodecylmethacrylate, cyclohexyl methacrylate, tert. butylmethacrylate, acrylamide, N-methylolacrylamide, diacetone acrylamide, N-tert. butyl acrylamide, N-butoxy acrylamide, 2-ethoxy ethyl methacrylate, gamma-methacryloxypropyl trimethoxy silane, 2-cyanoethyl acrylate, 3-cyanopropyl acrylate, tetrahydrofufuryl chloroacrylate, glycidyl acrylate, etc.

Another group of monomers of the type (I) are those derived from dihydric and polyhydric alcohols such as the glycols and glycerols. Illustrative monomers of this type include ethylene glycol diacrylate, ethylene glycol dimethacrylate, polyethylene glycol diacrylate, diethylene glycol dimethacrylate, trimethylol propane trimethacrylate, pentaerythritol triacrylate and other polyether di- and poly- acrylates and methacrylates.

Another class of polymerizable monomers of this type are the esters derived from dicarboxylic acid/anhydride, dihydric alcohol and acrylic/methacrylic acid. Typical monomers of this class include, for example, dimethacrylate of bis(ethylene glycol) maleate, dimethacrylate of bis(diethylene glycol) phthalate, dimethacrylate of bis(tetraethylene glycol) phthalate, dimethacrylate of bis(tetraethylene glycol) sebacate, dimethacrylate of bis(tetraethylene glycol) maleate and the diacrylates and chloroacrylates corresponding to said dimethacrylates, etc.

Another group of monomers of the general type (I) are the isocyanate-hydroxyacrylate or isocyanate-aminoacrylate reaction products which may be characterized as acrylate terminated polyurethanes and polyureides or polyureas. Still another group of representative monomers of this type are the mono- and polyacrylate esters of bisphenol type compounds, such as the diacrylate and dimethacrylate esters of bisphenol A and of 4,4' -bis-hydroxyethoxy-bisphenol A.

The monomers of the type (I) which are useful herein, are further described in US-A- 4,602,073. These monomers are polymerizable monomers having one or more acrylic or substituted acrylic groups as a common, unifying characteristic, and for convenience may be generically termed acrylic and substituted acrylic monomers.

Especially useful acrylic monomers are the alkyl and cycloalkyl acrylates and methacrylates having 1 to 18, preferably 1 to 6 carbon atoms in the ester moiety and particularly those containing polar hydroxyl, ether (i.e. polyoxyalkylene), cyano and chloro groups.

In preparing these curable compositions, it is within the scope of the present invention that the required acrylic monomer may be a mixture of acrylic monomers rather than a single acrylic monomer, and there may also be utilized in combination therewith, other non-acrylic, ethylenically unsaturated copolymerizable comonomers such as unsaturated hydrocarbons, unsaturated esters and ethers, vinyl esters, and the like. Typical optional comonomers include: vinyl acetate, methyl vinyl ether, methyl vinyl ketone, poly (ethylene maleate), allyl alcohol, allyl acetate, 1-octene, styrene, etc.

The photoinitiator used in the compositions of this invention are compounds capable of generating both a cationic species and a free radical species upon exposure to radiation so as to initiate polymerization of both the slow cure, epoxy monomers and the fast cure, acrylic monomer. Compounds of this type include the onium and metallocene salts. More particularly, useful photoinitiators are the onium salts of Group Va, Group VIa and Group VIIa and iron-arene complexes. While any of the noted photoinitiators that generate both a cationic species and a free radical species may be used, the preferred photoinitiator compounds are aromatic sulfonium, aromatic iodonium and the iron-arene complexes and especially preferred are the aromatic sulfonium and iron-arene complexes.

The aromatic sulfonium compounds which are particularly preferred are the triarylsulfonium salts and complexes thereof. Compounds of this type have the general formula:

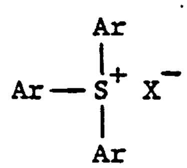

where Ar is an aryl group and X is an anion such as $BF_4^-$, $PF_6^-$, $AsF_6^-$, $SbF_6^-$ and $ClO_4^-$. It is noted that while the above formula discloses triaryl substituted groups, other compounds or complexes having at least one $SAr_3$ group are included. Typical compounds of this type are:

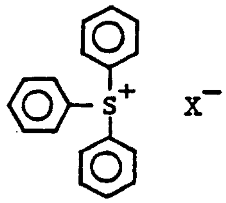

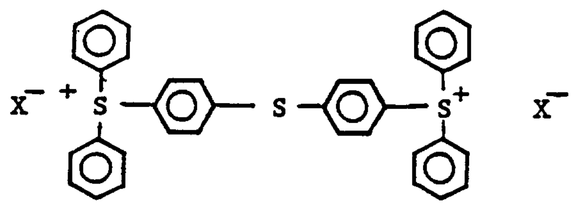

and

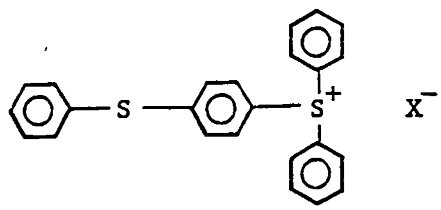

The triarylsulfonium salts and complexes thereof as described above, are known compounds and have been disclosed and described in articles by J. V. Crivello et al. entitled "Complex Triarylsulfonium Salt Photoinitiators, I and II" in J. Polymer Science: Polymer Chemistry Edition, Vol. 18, pp. 2677-2695 and 2697-2714, 1980 and in "UV-Curing: Science and Technology", edited by S. P. Pappas et al., Vol. I and II, Technology Marketing Corp., 1978 and 1985.

The aromatic iodonium compounds which are particularly preferred are the diaryliodonium salts and complexes thereof. Compounds of this type have the general formula:

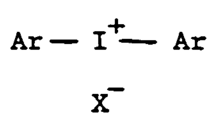

where Ar is an aryl group and X is an anion. Compounds of this type are known and have been disclosed in US-A- 4,026,705 and in S. P. Pappas et al., cited above.

The iron-arene complexes useful as photoinitiators are mixed arene cyclopentadienyl metal salts of complex metalhalide anions and have the following general formula:

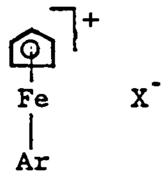

where Ar is an aryl or fused group of 2 or more aryl groups and X is an anion. Compounds of this type have been disclosed in K. Meier et al, "Photoinitiated Cationic Polymerization of Epoxides with Iron-Arene Complexes" In J. Radiation Curing, Oct. 1986, pp. 28-32 and in Vol. II of S. P. Pappas et al., cited above.

Photoinitiators of the types described above have also been disclosed in US-A- 4,173,476 which shows triarylsulfonium complex salts; US-A-4,069,056 and 4,175,973 which show aromatic onium salts of Group Va elements; US-A- 4,058,400 and 4,058,401 which describe aromatic onium salts of Group VIa elements and US-A- 4,090,936 and 4,256,828 which show aromatic sulfonium and aromatic iodonium complex salts.

The radiation curable composition of the invention will generally contain at least 50%, more particularly about 50 to 95% and preferably about 60 to 80% by weight of the epoxy monomer. The fast cure acrylic component will comprise from about 5 to 35% and preferably about 5 to 25% by weight of the composition. The photoinitiator will comprise an effective amount, more particularly about 0.1 to 10% and preferably about 0.1 to 5% by weight of the composition.

Other additives or modifiers may be included as the radiation curable adhesive, sealant or coating composition, if desired. Reactive diluents which are low viscosity materials such as ethers, epoxies, hydroxy compounds and polyols may be used. Typical reactive diluents are butanediol divinyl ether, diethylene glycol divinyl ether, triethylene glycol divinyl ether, butyl glycidyl ether, butanediol diglycidyl ether and limonene dioxide (dipentene dioxide). Non- reactive diluents such as solvents and plasticizers, e.g. ethylene glycol, diethylene glycol and other mono and polyglycols may also be used.

Toughening agents may be added to the composition of this invention and include low molecular weight elastomers or rubber such as polybutadiene, polyisoprene, styrene/butadiene or acrylonitrile/butadiene copolymers containing terminal reactive groups, e.g. vinyl or substituted vinyl, -COOH, $-NH_2$, $-SO_2Cl$, etc., i.e. Hycar (registered trademark of B. F. Goodrich Co.) products, chlorosulfonated polyethylene e.g. Hypalon (registered trademark of E. I. duPont de Nemours & Co.) products, and caprolactum based polyols.

Other additives or modifiers which are conventionally used such as fillers, dye stuffs, surfactants and plasticizers may be added to the composition in amounts of up to about 50% by weight if desired.

Activation of the photoinitiator to initiate cure of the composition of this invention is made through exposure to any source of radiation emitting electromagnetic waves. This would include ultraviolet light, visible light (sunlight), electron beam, x-rays and infrared radiation. While the high energy forms of radiation typically mentioned above, may be used, exposure to ultraviolet radiation is highly satisfactory and preferred as the radiation source. The exposure to radiation normally required is usually of short duration, e.g. 60 seconds or less and will depend on the intensity of the radiation and the thickness of the sealant or coating desired. Longer exposure periods may in some case be desirable, but usually periods of up to 30 seconds will be sufficient.

In certain situations it may be desirable to add an activator or sensitizer and oxidant along with the photoinitiator to aid in the initiation of the cure upon exposure to radiation. This, for example, may be desired when the radiation source is in the ultraviolet range just outside or at the extreme of the range needed for a particular photoinitiator or in the case of a ferrocene type photoinitiator wherein the use of an oxidant, such as a hydroperoxide, places it in an oxidized state leading to faster photodecomposition. Typical activators and sensitizers which are useful include aromatic tertiary amines and aromatic polycyclic compounds having three or more fused benzene rings, e.g. triphenylamine, 2-ethyl-9,10-dimethoxyanthracene, anthracene, 9-methylanthracene, rubrine, perylene and tetraphenyl benzedine. The amounts of activator, sensitizer and oxidant which can be used is generally a small effective amount and is included as part of the amount of photoinitiator noted earlier. That is, the photoinitiator or photoinitiator system includes the photoinitator salt complex itself plus optional activator, sensitizer and oxidant, as a total package in effective amounts, particularly about 0.1 to 10% and preferably about 0.1 to 5% by weight of the composition.

The curing of the adhesive, sealant or coating composition is initiated by exposure to the radiation source and will continue after the source is removed. The use of thermal energy during or after exposure to the radiation source will generally accelerate the curing reaction and may be desirable, if conditions permit.

In applying the adhesive, sealant or coating compositions to a substrate, they may be applied by conventional coating or injection techniques followed by irradiation to initiate the cure. When applied as sealants to underground gas mains and other pipelines, for which purpose such compositions have been specifically designed, they may be applied by conventional spin spraying or injection techniques using either preformed mixtures or separate component feeds to a common spray mixing or injection nozzle of the type currently used in the application of two part sealant compositions, e.g. two part epoxies or two part polyurethanes.

However, it is a particular feature of the compositions of the present invention that they are essentially designed as one part compositions. More than that, they are designed for spray and injection procedures, particularly in underground gas mains and other pipelines, as well as other circumstances and applications, wherein the liquid sealant composition is fed through a feed line to a spray or injection apparatus at a remote location, e.g. inside a gas main. At this point, the rheology of the composition is altered prior to the injection or spraying process in order to match the rheology of the sprayed or injected composition more closely either to the requirements of the spray or injection equipment itself, or to the requirements of the sprayed or injected composition itself during or immediately after the injection or spraying process, e.g. the requirement for rapid gellation or initial setting of the sprayed or injected composition.

In accordance with the present invention this is achieved by irradiating the composition immediately before spraying or injection, rather than after, so that the initial gelling, caused by the more rapid free radical polymerization process, takes place as the composition is sprayed or injected. Such initial gelling can be brought about quite simply by incorporating into the feed line, immediately upstream of the spray or injection equipment, a section that is translucent to the initiating radiation, whether it be ultraviolet light, visible light, or electron beam, and irradiating the sealant composition as it passes through that section, thereby to initiate the curing process before, rather than after, application. Alternatively, of course, where circumstances permit, the cure can be initiated in the more conventional way by post-irradiation of the injected or sprayed composition.

Thus, in a very specific aspect, the present invention comprises a method of sealing leaks in underground gas mains and other pipelines, which comprises feeding to a spray or injection apparatus located in the pipeline adjacent the area to be sealed, a premixed radiation-curable sealant composition of the type described herein, exposing that composition to radiation to initiate the cure thereof at said location immediately upstream of the spray or injection apparatus, spraying the cure-initiated composition onto the interior wall of the pipeline in the region of the leakage, or injecting the cure-initiated composition, as the case may be, into the point of leakage in said wall, and allowing the sealant composition to complete the curing process in situ.

The following examples are further illustrative of this invention and are not intended to be construed as limitations thereof. In the examples, all parts or percents (%) are by weight, unless otherwise noted.

The following apparatus and test methods were used in the examples.

Apparatus:

The radiation source used was a 400w DR HONLE UVASPOT 400/T lamp. A filter was used to control wavelength at 295 nm + and the sample was irradiated at a distance of 20 cm. from the light source. The UV-A intensity at this distance was 30 $mW/cm^2$

Set time:

Time taken for initially low viscosity liquid formulation to partially gel on a steel test piece and not slump when held vertically. The liquid samples were applied to the steel piece by pipette and then irradiated for the minimum time to achieve a "set" film.

Adhesion:

Subjective test of the samples were taken after irradiation and then post curing by heating at 100 °C to ensure complete polymerization. The sample coating was tested by scraping/chiselling with a sharp steel rod (screwdriver).

Flexibility:

Subjective test, after cure as outlined in adhesion above, by bending the steel test piece through 180° and looking for signs of cracking.

EXAMPLE I

The following formulated compositions were irradiated using the UV radiation source described above and were tested to determine the set time as described above and measure the depth of cure.

| | Sample A | Sample B |
|---|---|---|
| K 126[1] | 46.0% | 45.5% |
| Limonene dioxide | 10.0 | 10.0 |
| HPMA[2] | 15.0 | 15.0 |
| PPGMA[3] | 15.0 | 14.75 |
| Hycar VTBNX 1300x23[4] | 5.0 | 5.0 |
| Dow DER 331[5] | 5.0 | 5.0 |
| K185[6] | 4.0 | — |
| Irgacure 261[7] | — | 2.0 |
| CHP[8] | — | 2.5 |
| Anthracene | — | 0.25 |
| | | |
| Set time (seconds) | 15 | 10 |
| Depth of cure (max., mm.) | 1-2 | 10 |

1 3,4-epoxycyclohexyl -3',4'-epoxycyclohexane carboxylate

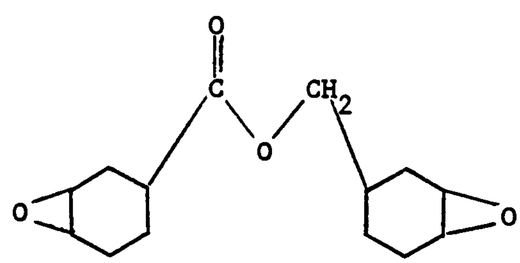

2 HPMA - hydroxypropyl methacrylate

3 PPGMA - polypropylene glycol monomethacrylate

4

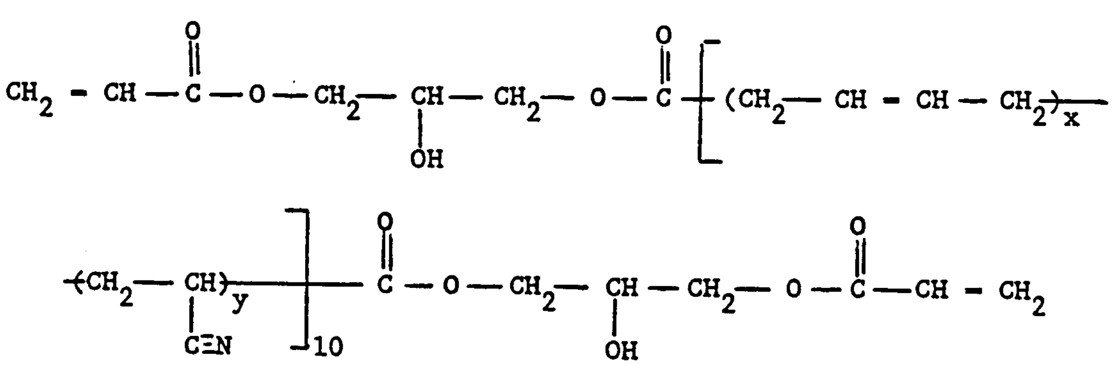

5

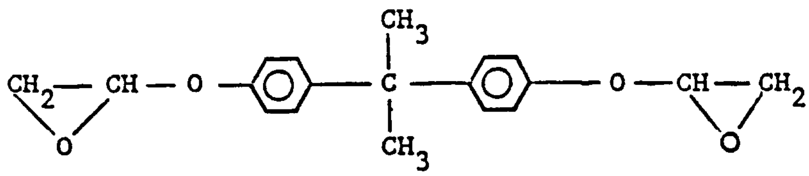

6

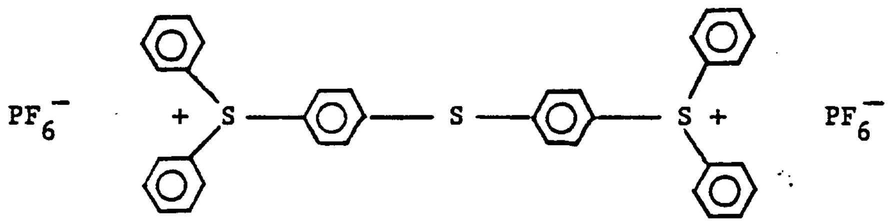

7

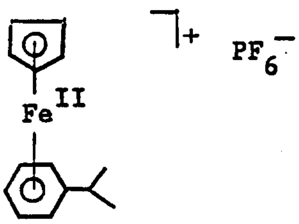

8 cumene hydroperoxide

EXAMPLE II

The following formulated compositions were irradiated as in Example I and tested to determine set time, flexibility and adhesion in accordance with procedures described above.

| | Sample C | Sample D |
|---|---|---|
| K 126[1] | 35.25% | 44.61% |
| HPMA[2] | 5.0 | 6.33 |
| PPGMA[3] | 15.0 | 18.99 |
| Rapicure $DVE_3$ [4] | 5.0 | 6.33 |
| Limonene dioxide | 15.0 | 18.99 |
| Hycar VTBNX 1300X23[5] | 20.0 | - |
| Irgacure 261[6] | 2.0 | 2.0 |
| CHP[7] | 2.5 | 2.5 |
| Anthracene | 0.25 | 0.25 |
| Set time (seconds) | 15 | 10 |
| Flexibility | Good | Poor |
| Adhesion | Good | Good |

[1, 2, 3, 5, 6, 7] are described in Example I

3-triethylene glycol divinyl ether

EXAMPLE III

The following formulated compositions were irradiated as in Example I and tested to determine set time, flexibility and adhesion in accordance with procedures described above.

| | Sample E | Sample F | Sample G |
|---|---|---|---|
| K 126[1] | 30.25% | 25.25% | 25.25% |
| Rapicure $DVE_3$ [2] | 10.0 | 10.0 | 10.0 |
| Limonene dioxide | 15.0 | 15.0 | 15.0 |
| HPMA[3] | 5.0 | 10.0 | 5.0 |
| PPGMA[4] | 15.0 | 15.0 | 20.0 |
| Hycar VTBNX 1300X23[5] | 20.0 | 20.0 | 20.0 |
| Irgacure 261[6] | 2.0 | 2.0 | 2.0 |
| CHP[7] | 2.5 | 2.5 | 2.5 |
| Anthracene | 0.25 | 0.25 | 0.25 |
| Set time (seconds) | 20 | 30 | 30 |
| Flexibility | Good | Average | Good |
| Adhesion | Good | Good | Average |

[1, 3, 4, 5, 6, 7] are described in Example I
[2] triethylene glycol divinyl ether

## Claims

1. The method of applying an adhesive sealant or coating composition to seal leaks at a remote location in an underground pipeline which comprises feeding the uncured composition to that location and initiating the cure of the composition by exposure to an initiating radiation at that location immediately prior to or after the application of the composition to the pipeline, the composition comprising a single part radiation curable composition containing a slow cure component which is a cationically polymerizable polyepoxide monomer, a fast cure component which is a free radical polymerizable acrylic or substituted acrylic monomer, the slow and fast cure components are polymerizable by different reactions which proceed at two different rates, and a single photoinitatior which is a compound capable upon exposure to a radiation source of generating both a cationic species capable of initating polymerization of the polyepoxide monomer and a free radical species capable of initiating polymerization of the acrylic monomer.

2. The method of Claim 1 wherein the photoinitiator is an onium salt compound or a metallocene, the polyepoxide component is a diepoxide and the acrylic component is an ester of the formula:

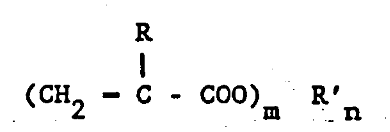

where R is $CH_3$, R' is a mono- or polyvalent organic group, m is an integer of 1 or more depending on the nature of the R' group and n is an integer of 1 or more.

3. The method of Claim 2 wherein the photoinitiator is a triarylsulfonium salt complex, a diaryliodonium salt complex or an iron-arene complex, the polyepoxide component is a cycloaliphatic diepoxide or a glycidyl polyether of polyhydric phenols and polyhydric alcohols, and the acrylic component is an alkyl or cycloalkyl acrylate or methacrylate having 1 to 6 carbon atoms as the ester moiety.

4. The method of Claim 3 wherein m in the acrylic component is 1, the polyepoxide component is present in an amount of from 50 to 95% by weight and the acrylic component is present in an amount of from 5 to 35% by weight.

5. The method of Claim 1, wherein the uncured composition is fed to an applicator means positioned in the underground pipeline in the region of the leak and operable to apply the composition to the internal wall of the pipeline in the region of the leak, or to inject the composition into the leaking portion of the pipeline, exposed to an initiating radiation immediately upstream of the applicator means, applying or

injecting the cure-initiated composition to, or into, the internal wall of the pipeline in the region of the leak, and allowing the applied composition to complete its cure in situ.

**6.** The method of Claim 5 wherein the photoinitiator is an onium salt compound or a metallocene, the polyepoxide component is a diepoxide and the acrylic component is an ester of the formula:

$$(CH_2 - \overset{R}{\overset{|}{C}} - COO)_m\ R'_n$$

where R is H or $CH_3$, R' is a mono- or polyvalent organic group, m is an integer of 1 or more depending on the nature of the R' group and n is an integer of 1 or more.

**7.** The method of Claim 6, wherein the photoinitiator is a triarylsulfonium salt complex, a diaryliodonium salt complex or an iron-arene complex, the polyepoxide component is a cycloaliphatic diepoxide or a glycidyl polyether of polyhydric phenol and polyhydric alcohols, and the acrylic component is an alkyl or cycloalkyl acrylate or methacrylate having 1 to 6 carbon atoms in the ester moiety.

**8.** The method of Claim 6 wherein m in the acrylic component is 1, the polyepoxide component is present in an amount of from 50 to 95% by weight and the acrylic component is present in an amount of from 5 to 35% by weight.

**9.** The method of Claim 8 wherein the cure-initiated composition is applied to the interior of the pipeline by spin spraying.

**10.** The method of Claim 8, wherein the underground pipeline is a gas main.

## Patentansprüche

**1.** Verfahren zur Anwendung einer Klebdichtungsmittel- oder -überzugszusammensetzung zur Abdichtung von Lecks an einer entfernten Stelle in einer unterirdischen Pipeline, welches die Zuführung der ungehärteten Zusammensetzung zu dieser Stelle und die Initiierung der Härtung der Zusammensetzung durch Bestrahlung mit einer Initialstrahlung an dieser Stelle unmittelbar vor oder nach der Auftragung der Zusammensetzung auf die Pipeline umfaßt, wobei die Zusammensetzung eine einteilige strahlungshärtbare Zusammensetzung, die eine langsamhärtende Komponente, die ein kationisch polymerisierbares Polyepoxidmonomeres ist, und eine schnellhärtende Komponente, die ein durch freie Radikale polymerisierbares Acryl- oder substituieres Acrylmonomeres ist, wobei die langsam- und die schnellhärtenden Komponenten durch verschiedene Reaktionen polymerisierbar sind, die mit zwei verschiedenen Geschwindigkeiten fortschreiten, und einen einzelnen Photoinitiator umfaßt, der eine Verbindung ist, die in der Lage ist, bei Bestrahlung durch eine Strahlungsquelle sowohl eine kationische Spezies, die imstande ist, die Polymerisation des Polyepoxidmonomeren zu initiieren, als auch eine freie Radikalspezies zu erzeugen, die imstande ist, die Polymerisation des Acrylmonomeren zu initiieren.

**2.** Verfahren nach Anspruch 1, worin der Photoinitiator eine Oniumsalzverbindung oder ein Metallocen ist und die Polyepoxidkomponente ein Diepoxid und die Acrylkomponente ein Ester der Formel

$$(CH_2 = \overset{R}{\overset{|}{C}} - COO -)_m\ R'_n$$

ist, wobei R $CH_3$, R' eine ein- oder mehrwertige organische Gruppe, m eine ganze Zahl von 1 oder darüber, abhängig von der Natur der R'-Gruppe, und n eine ganze Zahl von 1 oder darüber ist.

3. Verfahren nach Anspruch 2, worin der Photoinitiator ein Triarylsulfoniumsalzkomplex, ein Diaryljodoniumsalzkomplex oder ein Eisen-Aren-Komplex, die Polyepoxidkomponente ein cycloaliphatisches Diepoxid oder ein Glycidylpolyether mehrwertiger Phenole und mehrwertiger Alkohole und die Acrylkomponente ein Alkyl- oder Cycloalkylacrylat oder -methacrylat mit 1 bis 6 Kohlenstoffatomen in der Esterhälfte ist.

4. Verfahren nach Anspruch 3, worin m in der Acrylkomponente gleich 1 ist und die Polyepoxidkomponente in einer Menge von 50 bis 95 Gew.-% und die Acrylkomponente in einer Menge von 5 bis 35 Gew.-% vorliegen.

5. Verfahren nach Anspruch 1, worin die ungehärtete Zusammensetzung einem Applikator zugeführt wird, der sich in der unterirdischen Pipeline im Bereich des Lecks befindet und in der Lage ist, die Zusammensetzung auf die innere Wandung der Pipeline im Bereich des Lecks aufzubringen oder die Zusammensetzung in den leckenden Teil der Pipeline zu injizieren, der unmittelbar stromaufwärts des Applikators einer initiierenden Strahlung ausgesetzt wird, wobei die Zusammensetzung, deren Aushärtung initiiert ist, auf oder in die innere Wandung der Pipeline im Bereich des Lecks aufgebracht oder injiziert wird, worauf die aufgebrachte Zusammensetzung in situ aushärten gelassen wird.

6. Verfahren nach Anspruch 5, worin der Photoinitiator eine Oniumsalzverbindung oder ein Metallocen, die Polyepoxidkomponente ein Diepoxid und die Acrylkomponente ein Ester der Formel

$$(CH_2 = \overset{\overset{\displaystyle R}{|}}{C} - COO -)_m - R'_n$$

ist, wobei R H oder $CH_3$, R'eine ein- oder mehrwertige organische Gruppe, m eine ganze Zahl von 1 oder darüber, abhängig von der Natur der R'-Gruppe, und n eine ganze Zahl von 1 oder darüber, ist.

7. Verfahren nach Anspruch 6, worin der Photoinitiator ein Triarylsulfoniumsalzkomplex, ein Diaryljodoniumsalzkomplex oder ein Eisen-Aren-Komplex, die Polyepoxidkomponente ein cycloaliphatisches Diepoxid oder ein Glycidylpolyether von mehrwertigen Phenolen und mehrwertigen Alkoholen und die Acrylkomponente ein Alkyl- oder Cycloalkylacrylat oder -methacrylat mit 1 bis 6 Kohlenstoffatomen in der Esterhälfte ist.

8. Verfahren nach Anspruch 6, worin m in der Acrylkomponente gleich 1 ist und die Polyepoxidkomponente in einer Menge von 50 bis 95 Gew.-% und die Acrylkomponente in einer Menge von 5 bis 35 Gew.-% vorliegen.

9. Verfahren nach Anspruch 8, worin die Zusammensetzung, deren Aushärtung bereits initiiert ist, auf das Innere der Pipeline durch Drehsprühen aufgebracht wird.

10. Verfahren nach Anspruch 8, worin die unterirdische Pipeline eine Gasversorgungsleitung ist.

## Revendications

1. Procédé d'application d'une composition adhésive d'étanchéité ou de revêtement pour obturer de manière étanche des fuites à un emplacement éloigné dans une canalisation souterraine, qui comprend les étapes consistant à amener la composition non durcie à cet emplacement et à déclencher le durcissement de la composition par exposition à un rayonnement initiateur à cet emplacement immédiatement avant ou après l'application de la composition à la canalisation, la composition comprenant une composition en une seule partie durcissable par irradiation contenant un constituant à durcissement lent qui est un monomère polyépoxyde cationiquement polymérisable, un constituant à durcissement rapide qui est un monomère acrylique ou acrylique substitué polymérisable par radicaux libres, les constituants à durcissement lent et à durcissement rapide étant polymérisables par des réactions différentes qui s'effectuent à deux vitesses différentes, et un seul photo-initiateur qui est un composé capable, par exposition à une source de rayonnement, d'engendrer à la fois une entité cationique capable de déclencher la polymérisation du monomère polyépoxyde et un radical libre

capable de déclencher la polymérisation du monomère acrylique.

2. Procédé suivant la revendication 1, dans lequel le photo-initiateur est un sel d'onium ou un métallocène, le constituant du type polyépoxyde est un diépoxyde, et le constituant acrylique est un ester de formule :

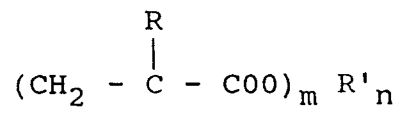

dans laquelle R représente un groupe $CH_3$, R' représente un groupe organique mono- ou polyvalent, m est un nombre entier égal ou supérieur à 1 en fonction de la nature du groupe R' et n est un nombre entier égal ou supérieur à 1.

3. Procédé suivant la revendication 2, dans lequel le photo-initiateur est un complexe de sel de triarylsulfonium, un complexe de sel de diaryliodonium ou un complexe fer-arène, le constituant du type polyépoxyde est un diépoxyde cycloaliphatique ou un polyéther de glycidyle de phénols polyhydroxyliques et d'alcools polyhydroxyliques, et le constituant acrylique est un acrylate ou méthacrylate d'alkyle ou de cycloalkyle possédant 1 à 6 atomes de carbone dans le groupement ester.

4. Procédé suivant la revendication 3, dans lequel m, dans le constituant acrylique, est égal à 1, le constituant du type polyépoxyde est présent en une quantité de 50 à 95 % en poids et le constituant acrylique est présent en une quantité de 5 à 35 % en poids.

5. Procédé suivant la revendication 1, dans lequel on amène la composition non durcie à un moyen d'application positionné dans la canalisation souterraine dans la région de la fuite et pouvant fonctionner pour appliquer la composition à la paroi intérieure de la canalisation dans la région de la fuite, ou pour injecter la composition dans la portion de la canalisation présentant une fuite, composition qui est exposée à un rayonnement initiateur immédiatement en amont du moyen d'application, on applique ou injecte la composition à durcissement déclenché à, ou dans, la paroi intérieure de la canalisation dans la région de la fuite, et on laisse la composition appliquée achever son durcissement in situ.

6. Procédé suivant la revendication 5, dans lequel le photo-initiateur est un sel d'onium ou un métallocène, le constituant du type polyépoxyde est un diépoxyde et le constituant acrylique est un ester de formule :

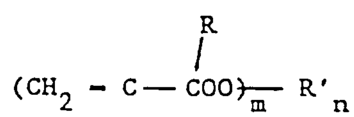

dans laquelle R représente H ou un groupe $CH_3$, R' représente un groupe organique mono- ou polyvalent, m est un nombre entier égal ou supérieur à 1 en fonction de la nature du groupe R' et n est un nombre entier égal ou supérieur à 1.

7. Procédé suivant la revendication 6, dans lequel le photo-initiateur est un complexe de sel de triarylsulfonium, un complexe de sel de diaryliodonium ou un complexe fer-arène, le constituant du type polyépoxyde est un diépoxyde cycloaliphatique ou un polyéther de glycidyle de phénols polyhydroxyliques et d'alcools polyhydroxyliques, et le constituant acrylique est un acrylate ou méthacrylate d'alkyle ou de cycloalkyle possédant 1 à 6 atomes de carbone dans le groupe ester.

8. Procédé suivant la revendication 6, dans lequel m, dans le constituant acrylique, est égal à 1, le constituant du type polyépoxyde est présent en une quantité de 50 à 95 % en poids et le constituant acrylique est présent en une quantité de 5 à 35 % en poids.

9. Procédé suivant la revendication 8, dans lequel la composition à durcissement déclenché est appliquée à l'intérieur de la canalisation par pulvérisation rotative.

10. Procédé suivant la revendication 8, dans lequel la canalisation souterraine est une conduite de gaz.